# EUROPEAN PATENT APPLICATION

(11) **EP 1 655 738 A1**
(43) Date of publication of application: **10.05.2006**
(21) Application number: 04771350.8
(22) Date of filing: 06.08.2004
(51) Int. Cl.: G12B 21/08, G01N 13/16

(54) **PROBE FOR PROBE MICROSCOPE USING TRANSPARENT SUBSTRATE, METHOD OF PRODUCING THE SAME, AND PROBE MICROSCOPE DEVICE**

(30) Priority: 11.08.2003 JP 2003290989
(71) Applicant: Japan Science and Technology Agency, Kawaguchi-shi, Saitama 332-0012 (JP)
(72) Inventor: KOBAYASHI, Dai, Room 303, 31-15, Setagaya-ku, Tokyo 157-0061 (JP); KAWAKATSU, Hideki, 9-18,Oyamadai 1-chome, Tokyo 158-0086 (JP)
(74) Representative: Hoarton, Lloyd Douglas Charles
(86) International application number: PCT/JP2004/011351
(87) International publication number: WO 2005/015570

(57) **Abstract**

A probe for a probe microscope, a manufacturing method of the probe, and a probe microscope device are provided, the probe having an optically transparent substrate with high accuracy and a cantilever provided on a front surface thereof, the substrate being small in size and having an observation window function. In the probe microscope device, there are provided a probe having at least one cantilever 1202 or 1204 which is supported on the front surface of a transparent substrate 1201 or 1203 with a predetermined space therefrom, the transparent substrate 1201 or 1203 being formed of a material transparent to visible light or near-infrared light, and having an observation window function which enables optical observation and measurement while partitioning environments of the inside and the outside of a container. Accordingly, through the rear surface of the transparent substrate, the cantilever 1202 or 1204 may be optically observed or measured or is optically driven.

## Description

### Technical Field

The present invention relates to a probe for a probe microscope using a transparent substrate, in which a cantilever can be optically driven and measured, to a manufacturing method of the probe, and to a probe microscope device.

### Background Art

An atomic force microscope, a scanning tunnel microscope and the like are collectively called a probe microscope. Although a probe microscope, such as a scanning tunnel microscope, which directly detects a tunnel current without using a cantilever is present, the probe microscope device of present invention relates to a probe microscope which uses a probe having a cantilever.

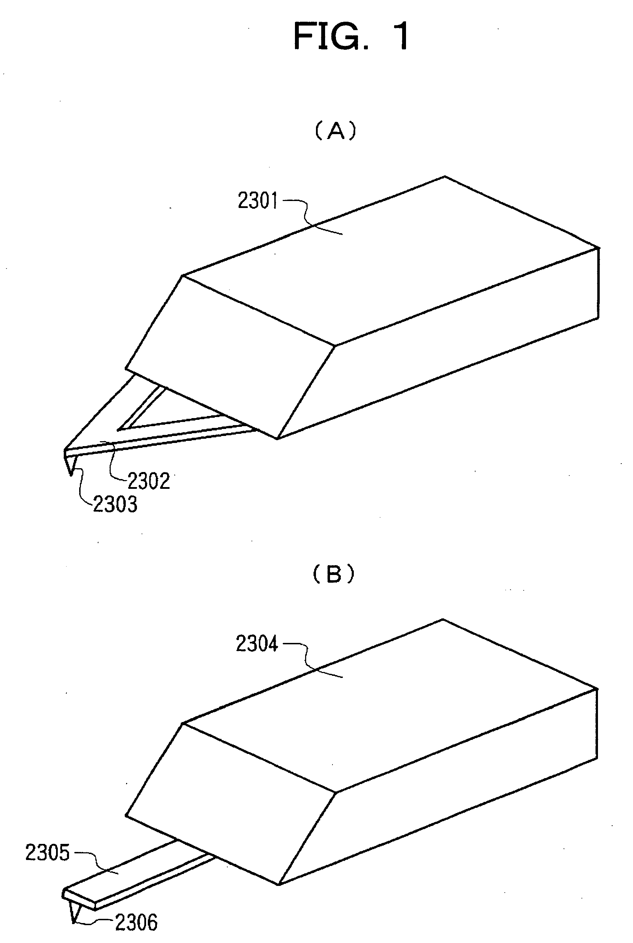

Fig. 1 includes perspective views each showing a conventional probe of a probe microscope. Fig. 1(A) shows a probe having a triangle cantilever, and Fig. 1 (B) shows a probe having a rectangular cantilever.

In Fig. 1(A), a triangle cantilever 2302 protrudes from a base 2301 of the probe, and at the free end of the cantilever, a probe tip 2303 is provided. In Fig. 1(B), a rectangular cantilever 2305 protrudes from a base 2304 of the probe, and at the free end of the cantilever, a probe tip 2306 is provided.

The base of the probe is used for handling the probe or for fixing the probe to a probe microscope device, and the length of the base is approximately several millimeters. The length of the cantilever is approximately from 100 µm to several hundred micrometers, and the thickness thereof is approximately several micrometers.

Hereinafter, by using an atomic force microscope as an example, the operation thereof will be briefly described.

In an atomic force microscope, the strength of the atomic force can be obtained by detecting the bending of a cantilever, which is caused by a mechanical interaction (atomic force) between a probe tip and a sample, or the change in resonant frequency of a cantilever. The atomic force microscope is a device that displays an enlarged image of a sample surface observed using an atomic force which is detected while the sample surface is scanned.

In addition, for example, when a probe tip of the above atomic force microscope is changed to that made of a ferromagnetic material, the magnetization state of a sample can be measured. Thus, by changing the probe tip or the like, a probe microscope which measures various physical values may be obtained.

For detection of a force using a cantilever, an optical lever is most often used.

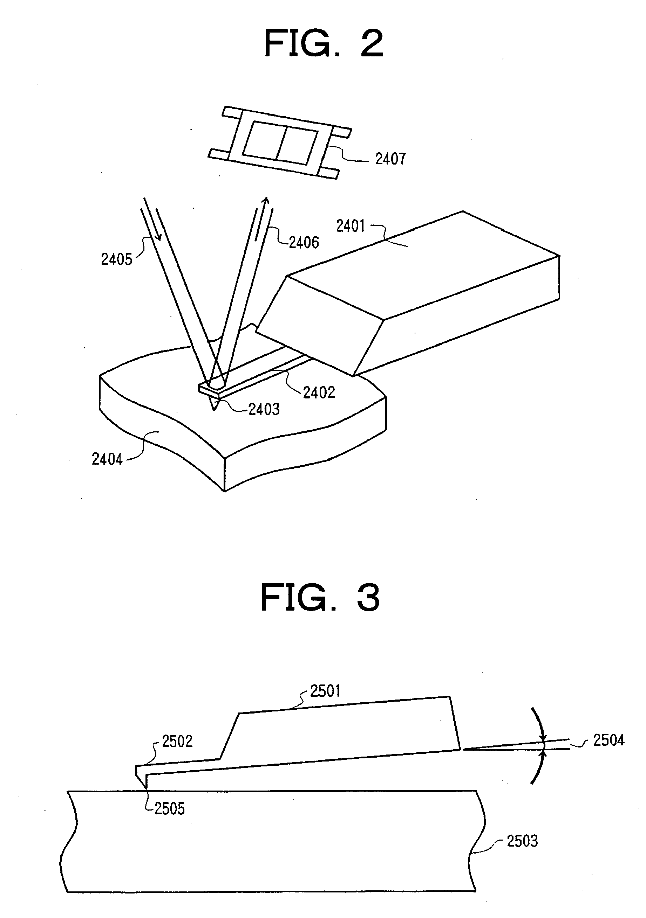

Fig. 2 shows the usage of a probe when an optical lever as described above is exploited.

In this figure, a base 2401 of the probe is fixed to a probe microscope device. A probe tip 2403 is provided at the free end of a cantilever 2402 which protrudes from the base 2401 of the probe, and a sample 2404 is placed in the probe microscope device. When the cantilever 2402 is bent by a force acting between the probe tip 2403 and the sample 2404, the optical lever is used in order to detect the change in angle of the cantilever caused by this bending. Laser light 2405 is made incident on the rear surface of the cantilever 2402, and the direction of laser light 2406 reflected therefrom is detected by a photodiode 2407. In the photodiode 2407, two chips are provided adjacent to each other, and since an output current ratio between the two chips varies in accordance with the position of a laser spot, the spot position can be detected. When the distance from the cantilever 2402 to the photodiode 2407 is increased to approximately several centimeters, a slight change in angle of the cantilever 2402 can be enlarged and detected.

Fig. 3 is a cross-sectional view showing a conventional positional relationship between a sample and a probe.

In this figure, reference numeral 2501 indicates a base of the probe, and reference numeral 2502 indicates a cantilever of the probe. When a sample 2503 has an undulated shape or is provided in an inclined manner, the probe 2501 and the sample 2503 may be disadvantageously brought into contact with each other even at a position other than a probe tip 2505. In order to avoid this unfavorable contact, a mounting angle 2504 of the probe 2501 is often set to be inclined by approximately 10° relative to the sample 2503.

When a force acting between the probe tip and the sample has nonlinearity, the change in resonant frequency of the cantilever is generated. In order to detect this change, it is necessary to detect the change in resonant frequency by vibrating the cantilever. In the case described above, besides the method using an optical lever, a method which detects the velocity of reflected light using a Doppler shift may also be used.

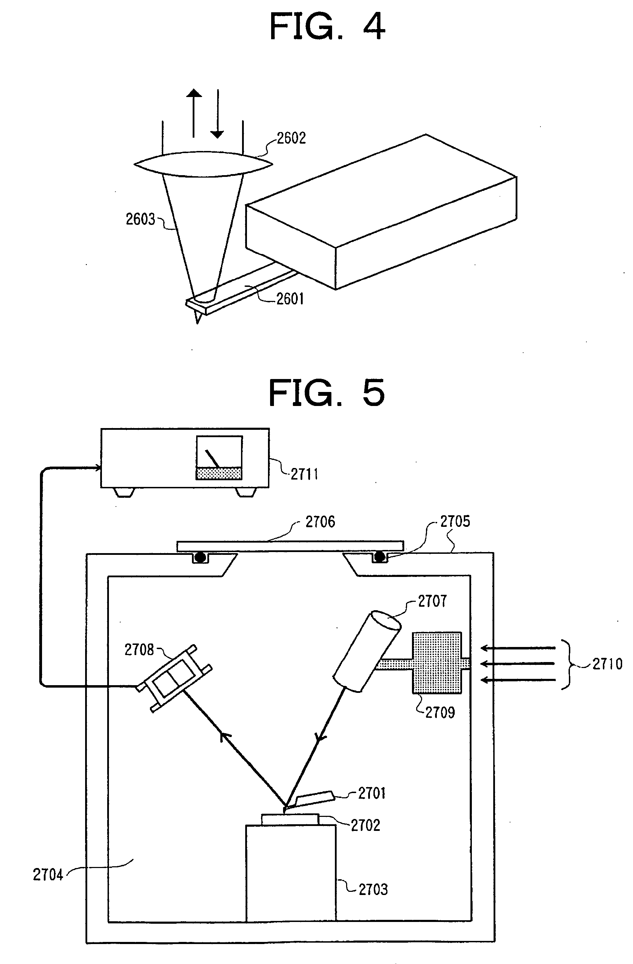

Fig. 4 shows the usage of a conventional probe when a laser Doppler velocimeter is exploited.

In this figure, laser light 2603 passing through an optical system 2602 is reflected on the rear surface of a cantilever 2601 and returns to the laser Doppler velocimeter (not shown) through the optical system 2602 again.
Patent Document 1: Japanese Patent Application Publication No. 6-267408 (pp. 3 and 4, and Fig. 1)
Non-Patent Document 1: M. V. Andres, K. W. H. Foulds, and M. J. Tudor, "Optical Activation of A Silicon Vibrating Sensor ", Electronics Letters 9th October 1986 Vol. 22 No. 21
Non-Patent Document 2: K. Hane, K. Suzuki, "Self-excited vibration of a self-supporting thin film caused by laser irradiation", Sensors and Actuators A51 (1996) 176 to 182

### Disclosure of Invention

However, according to the structure of the conventional probe described above, when the sample is placed in a vacuum, liquid, or toxic gas environment or in an environment at a high temperature or at a ultra low temperature (hereinafter these mentioned above are collectively called a specific environment), it is required that the optical system be placed in the same specific environment as that for the sample, or that the optical system be placed in the air while the probe is placed in the same specific environment as that for the sample and optical measurement is performed through an observation window.

Fig. 5 is a schematic cross-sectional view of a device used when an optical lever is placed in a vacuum environment.

In this figure, reference numeral 2705 indicates a vacuum container and gaskets, and an inside 2704 thereof is vacuumed. A sample 2702 and a probe 2701 are placed in a vacuum environment, and the sample 2702 is provided on a three-dimensional scanning mechanism 2703. A laser light source 2707 and a photodiode 2708, which form an optical lever, are placed in a vacuum environment. Adjustment of the optical lever is performed by adjusting the position of the laser light source 2707. In this case, the laser light source 2707 is set so as to be finely and precisely moved by a three-dimensional fine driving mechanism 2709. Since the laser light source 2707 and the three-dimensional fine driving mechanism 2709 are placed in a vacuum environment, in order to adjust reflected light of the laser spot so as to be incident on the center of the photodiode 2708, the direction of the laser light source 2707 is adjusted by operating the three-dimensional fine driving mechanism 2709 using mechanical or electrical means 2710 while monitoring an output current of the photodiode 2708 with a measuring instrument (display device) 2711. In this step, the position of the laser spot may be visually observed by naked eyes through an observation window 2706 in some cases; however, compared to the case in which the entire optical system is placed in the air, the adjustment is difficult. In particular, when the laser spot is not incident on the probe 2701 or the photodiode 2708, and when this situation cannot be monitored by naked eyes, the measuring instrument (display device) 2711 cannot be used, and as a result, it will take a considerably long time for the adjustment.

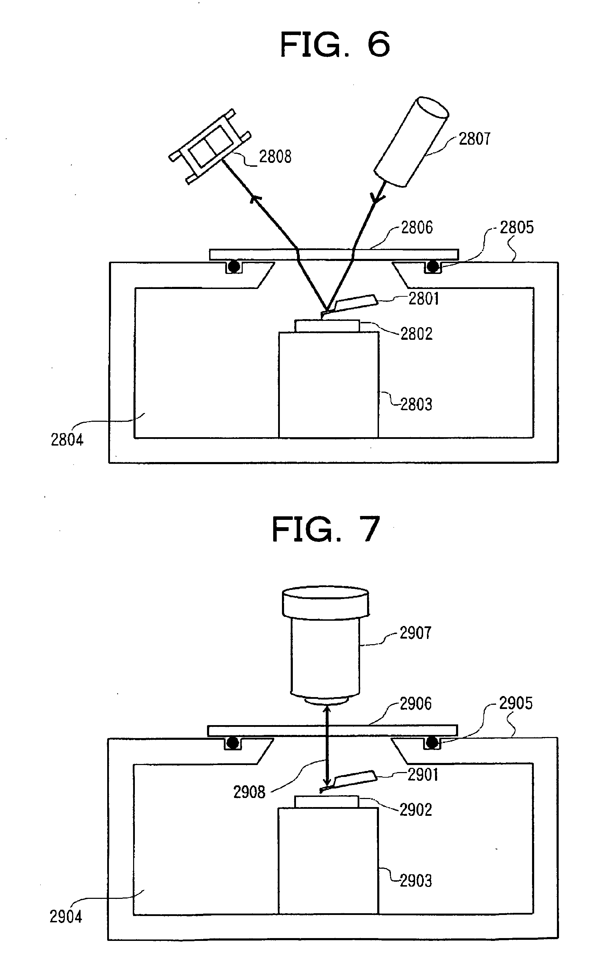

As described above, although the entire optical system can be placed in a vacuum or a gas environment, it is not preferable to place optical components in a liquid environment, a high temperature environment, or the like. Next, two examples in which optical components are placed in the air will be described with reference to Figs. 6 and 7.

Fig. 6 is a schematic cross-sectional view of a device in which an optical lever is formed through an observation window.

In this figure, reference numeral 2805 indicates a container and gaskets, and an inside 2804 thereof is in a specific environment such as in a vacuum, a toxic gas, a liquid, a ultra low temperature, or a high temperature environment.

A sample 2802 and a probe 2801 are placed in the above specific environment, and the sample 2802 is provided on a three-dimensional scanning mechanism 2803. On the other hand, a laser light source 2807 and a photodiode 2808 are disposed in the air and form an optical lever through an observation window 2806. In the structure described above, since light is refracted by the observation window 2806, when the observation window 2806 is deformed due to the difference in pressure or temperature between the inside and the outside of the device, the optical lever also unfavorably detects this deformation. When the area of the observation window 2806 is decreased and the thickness thereof is increased, the above problem may be reduced; however, it becomes difficult to observe the inside 2804 of the device, and in addition, it also becomes difficult to exchange the probe 2801 through an opening portion provided when a glass plate of the observation window 2806 is removed.

Fig. 7 is a schematic cross-sectional view of a device in which an optical element of a Doppler velocimeter is provided in the air.

In this figure, reference numeral 2905 indicates a container and gaskets, and an inside 2904 thereof is in a specific environment such as in a vacuum, a toxic gas, a liquid, a ultra low temperature or a high temperature environment. A sample 2902 and a probe 2901 are placed in a specific environment, and the sample 2902 is provided on a three-dimensional scanning mechanism 2903. The focus of an objective lens 2907 of an optical microscope is adjusted on the rear surface of a cantilever of the probe 2901 through an observation window 2906, and through this objective lens 2907, the velocity of the cantilever is detected using the Doppler velocimeter (not shown). Since the focal distance is decreased as an objective lens 2907 having a higher magnification is used, in order to increase the magnification, it is necessary that a distance 2908 between the rear surface of the cantilever and the objective lens 2907 be decreased as small as possible. However, when a mounting mechanism for the probe 2901 is taken into consideration, it is not easy to decrease the distance 2908 to 5 mm or less. In particular, when the inside is in a vacuum environment, the pressure is applied to the observation window 2906, and hence it is required that the thickness of the window be increased or that the area thereof be decreased. However, when the area is decreased, it becomes difficult to observe the inside 2904 of the device, and in addition, it also becomes difficult to exchange the probe 2901 through an opening provided when a glass plate of the observation window 2906 is removed. Furthermore, when a thick material is used, the distance 2908 cannot be decreased.

When the problems described above are summarized, a probe microscope for observing a sample placed in a specific environment, according to a conventional technique, has the following problems.
(1) When an optical system is placed in a specific environment together with a sample, a device becomes inevitably complicated, and the size thereof is also inevitably increased; hence, adjustment of the optical system becomes difficult.
(2) In a device in which an optical system is placed in the air, and in which a sample and a probe are placed in a specific environment, an observation window provided between the probe and the optical system may reduce the degree of freedom for designing the optical system or may cause optical strain in some cases.
(3) A probe placed in a specific environment is not easily exchanged.
(4) It is not easily performed to optically observe or measure a great number of cantilevers.

In consideration of the situations described above, an object of the present invention is to provide a probe for a probe microscope, a manufacturing method of the probe, and a probe microscope device, the probe microscope using a probe having a cantilever formed on a surface of an optically transparent substrate which is small in size and which has increased accuracy together with an observation window function.

In order to achieve the objects described above, the present invention provides the following.
[1] A probe for a probe microscope using a transparent substrate, comprises at least one cantilever which is made of a thin film and which is supported on one surface (a front surface) of the transparent substrate with a predetermined space therefrom, the transparent substrate being formed of a material transparent to visible light or near-infrared light and having an observation window function which enables optical observation and measurement while partitioning environments of the inside and the outside of a container. Accordingly, through the rear surface of the transparent substrate, the cantilever can be optically observed or measured or can be optically driven.
[2] In the probe for a probe microscope using a transparent substrate, described in the above [1], a microlens may be formed as a part of the transparent substrate, so that light used for optical observation or measurement of the cantilever, or for optical driving thereof is allowed to converge on the rear surface of the cantilever by the microlens.
[3] In the probe for a probe microscope using a transparent substrate, described in the above [1], the front surface of the transparent substrate may be slightly inclined to the rear surface thereof in order to prevent the interference between a light reflected on the front surface of the transparent substrate and a light reflected on the rear surface thereof.
[4] In the probe for a probe microscope using a transparent substrate, described in the above [1], the transparent substrate may also be used as a quarter-wave plate.
[5] In the probe for a probe microscope using a transparent substrate, described in the above [1], the cantilever may be allowed to have an internal stress, so that the space between the cantilever and the transparent substrate is gradually increased from a fixed portion of the cantilever toward the free end thereof.
[6] A method for manufacturing a probe for a probe microscope using a transparent substrate, comprises the steps of forming a cantilever from a single crystalline silicon thin film of a SOI substrate, bonding the rear surface of the SOI substrate to a glass substrate, and removing a handling wafer and a buried oxide film of the SOI substrate.
[7] In the method for manufacturing a probe for a probe microscope using a transparent substrate, described in the above [6], may further comprise the step of forming a probe tip at the free end of the cantilever by wet etching.
[8] A probe microscope device comprises the probe for a probe microscope using a transparent substrate, according to one of the above [1] to [5], and in the probe microscope device, deformation or vibration property of the cantilever, which is caused by interaction with a sample, is optically measured through the rear surface of the transparent substrate.
[9] In the probe microscope device according to the above [8], the deformation or the vibration property of the cantilever may be detected from the change in intensity of reflected light caused by optical interference which occurs between the cantilever and the transparent substrate.
[10] In the probe microscope device according to the above [8], the cantilever may be irradiated to vibrate through the rear surface of the transparent substrate with light having an intensity varying at a frequency which coincides with a resonant frequency of the cantilever.
[11] In the probe microscope device according to the above [8], the cantilever may be irradiated with light having a constant intensity through the rear surface of the transparent substrate so as to generate self-excited vibration in the cantilever.

In order to realize a probe microscope device used for observation and measurement of a sample placed in a specific environment by a conventional technique, an observation window made of a transparent material is necessarily provided for performing optical observation or measurement of the inside of a container, which is in a specific environment, while environments of the inside and the outside of the container is partitioned. Observation or measurement of a probe or a sample must be performed through the observation window described above. In addition, when optical properties are to be preferential, it is necessary that an optical component, a laser light source, a photodiode, or the like be placed in a specific environment. In contrast,
(1) according to the invention described in Claim 1, since the probe has an observation window function in which the cantilever can be optically observed or measured through the rear surface of the transparent substrate, optical observation and measurement can be performed while the environments of the inside and the outside of the container is partitioned by the probe itself. As a result, the structure of the device is simplified, and miniaturization thereof can be achieved.
   In addition, since the cantilever is directly mounted on the front surface of the transparent substrate, the space from the rear surface of the transparent substrate to the cantilever and the sample can be minimized, so that an objective lens for an optical microscope with a high magnification can be used compared to that for a probe microscope device according to a conventional technique.
   In addition, since the position of the cantilever on the transparent substrate is clearly determined, adjustment of an optical system can be easily performed. Furthermore, as a result, the area of the transparent substrate can be decreased to the minimum necessary. Even when the observation window of a device according to a conventional technique is decreased as small as possible, the diameter thereof is still approximately 2 cm; however, by the transparent substrate of the probe according to the present invention, the diameter can be decreased to several millimeters. Accordingly, when the pressure inside the container is the same as the outside pressure, the thickness of the transparent substrate can be decreased as compared to that of a conventional observation window, and hence an objective lens having a higher magnification for a microscope can be used.
   As the area of the transparent substrate is decreased, the strain thereof caused by pressure difference and/or temperature difference between the outside and the inside of the container is decreased, and as the thickness of the transparent substrate is decreased, influence of the strain to light passing through the transparent substrate can be decreased.
   Furthermore, the probe can be exchanged together with the transparent substrate, hence the exchange can be performed easily compared to a conventional technique. In addition, a probe having a great number of cantilevers may be used as auxiliary cantilevers prepared in a minimized space, and in this case, since angles of all the cantilevers are set in a predetermined manner, readjustment of the optical system can be easily performed.
   In addition, even in a probe having a very great number of cantilevers, since the positions and angles of all the cantilever are set in a predetermined manner, a probe microscope device can be easily formed in which measurements are simultaneously performed using all the cantilevers or in which measurement is performed using a selected cantilever. Incidentally, the probe microscope device of the present invention in which measurement is performed by selecting a cantilever using an optical scanner cannot be easily formed by a conventional technique.
(2) According to the invention described in Claim 2, since a probe having a microlens is used, part of the optical system such as an objective lens can be omitted.
(3) When a transparent substrate having two surfaces parallel to each other, interference may occur in some cases. That is, since incident light reflected on the front surface of the transparent substrate and incident light reflected on the rear surface thereof travel in the same direction, the interference may occur. The interference may cause errors of optical measurement.
   On the other hand, according to the invention of Claim 3, since the front surface of the transparent substrate is slightly inclined relative to the rear surface thereof, incident light reflected on the front surface of the transparent substrate and incident light reflected on the rear surface thereof travel in different directions, and hence no interference occurs.
(4) According to the invention of Claim 4, in the optical method in which incident light and outgoing light are led to different light paths by the beam splitter, the quarter-wave plate is not necessarily provided in the optical system. In particular, when a probe having both functions of the microlens described in Claim 2 and the quarter-wave plate described in Claim 4 is used, the optical system can be significantly simplified as compared to that of a probe microscope device by a conventional technique, and the probe microscope device can be significantly miniaturized.
(5) When a cantilever which is parallel to the substrate is used to measure an inclined sample or a sample with rough surface, an angular portion of the sample may be brought into contact with the substrate in some cases. On the other hand, according to the invention of Claim 5, since the cantilever is warped downward with respect to the substrate, a part other than the probe tip is not likely to be brought into contact with the substrate when measuring an inclined sample or a sample with rough surface.
(6) According to the invention of Claim 6, by using the bonding, the process can be simplified. In addition, in order to form the space between the cantilever and the transparent substrate after the bonding, the single crystalline silicon of the SOI substrate is processed beforehand so as to have different thicknesses, or a recess is formed in the substrate beforehand, so that the above process can be facilitated. When the bonding is not used, it is necessary to process the bottom side of the cantilever in some method or to form a sacrificial layer, and hence the process becomes complicated. When the transparent substrate under the cantilever is etched by hydrofluoric acid or the like, the etched surface cannot be made flat, and it is inconvenient when the cantilever is optically observed or measured through the rear surface of the transparent substrate.
   Moreover, the cantilever made of single crystalline silicon has advantages such that the number of defects is small, and the Q value is high; however, a method to provide sacrificial layer beforehand under the cantilever is not easily carried out when single crystalline silicon is used as a material for the cantilever. The reason for this is that silicon must be epitaxially grown on the sacrificial layer.
(7) According to the invention of Claim 7, due to crystal anisotropy of the single crystalline silicon thin film, the probe tip can be formed at the free end of the cantilever without fail, and the sharpness of the free end of the probe tip is not likely to depend on the accuracy of lithography.
(8) As a method for measuring the deformation of the cantilever using interference of light, there has been a conventional technique in which interference is allowed to occur between the cantilever and the end surface of an optical fiber. However, according to the method, positioning of the optical fiber and the cantilever and adjustment of the space therebetween must be carried out. On the other hand, according to the invention described in Claim 9, since the space between the cantilever and the transparent substrate is determined when the probe is formed, the adjustment is not required.
(9) According to the invention described in Claim 10, when an atomic force or the like acting on the cantilever is measured from the change in resonant frequency, the cantilever can be optically excited by intensity modulation of irradiation light, and a piezoelectric element for excitation is not required.
   In addition, when a piezoelectric element is placed in a ultra low temperature or high temperature environment, the properties thereof may be changed, or the piezoelectric element may not be used in some cases. However, according to the invention described in Claim 10, since optical driving can be performed, the above problem does not occur at all. Subsequently, excitation caused by light does not need wires, and the size of the device can be considerably decreased. Furthermore, when a probe having a great number of cantilevers is used, it is difficult to selectively excite only one cantilever in use by a piezoelectric element, and the entire probe is inefficiently excited. In contrast, when excitation by light is employed in combination with an optical scanner, a cantilever currently in use can only be driven.
(10) According to the invention described in Claim 11, when driving is performed by irradiation of light having a constant intensity, the following advantages can be obtained besides an effect equivalent to that of the probe microscope device described in Claim 10.

Even if the resonant frequency of each cantilever is not known, vibration properties can be obtained by simply analyzing optically detected vibration which is generated by self-excitation. Furthermore, in the case in which a probe having a very great number of cantilevers is used, all the cantilevers can be excited at the respective resonant frequencies by irradiating the entire probe with light for excitation. Then light returning from the entire probe is received by a light-receiving element and is converted into electrical signals, followed by simple analysis using a spectrum analyzer, thereby the vibration properties of all the cantilevers can be obtained.

### Brief Description of the Drawings

Fig. 1 includes perspective views each showing a conventional probe of a probe microscope.
Fig. 2 is a view showing the usage of a probe when a conventional optical lever is exploited.
Fig. 3 is a cross-sectional view showing a conventional positional relationship between a sample and a probe.
Fig. 4 is a view showing the usage of a probe when a conventional laser Doppler velocimeter is used.
Fig. 5 is a view showing one example of the structure of a probe microscope according to a conventional technique.
Fig. 6 is a view showing one example of the structure of a probe microscope according to a conventional technique.
Fig. 7 is a view showing one example of the structure of a probe microscope according to a conventional technique.
Fig. 8 is a perspective view showing a probe of Embodiment 1 according to the present invention.
Fig. 9 is a perspective view of a probe of Embodiment 1 of the present invention, the probe having a very great number of cantilevers.
Fig. 10 is a partial cut-away perspective view showing a probe of Embodiment 2 according to the present invention.
Fig. 11 is a partial cut-away perspective view showing another example of a probe of Embodiment 2 according to the present invention.
Fig. 12 includes cross-sectional views showing the structure of a probe of Embodiment 3 according to the present invention.
Fig. 13 includes cross-sectional views each showing the structure of a probe of Embodiment 4 according to the present invention.
Fig. 14 includes cross-sectional views showing the structure of a probe of Embodiment 5 according to the present invention.
Fig. 15 includes cross-sectional views each for illustrating the state in which a sample is observed by the cantilever shown in Fig. 14.
Fig. 16 includes steps (Part 1) of manufacturing a probe of Embodiment 6 according to the present invention.
Fig. 17 includes steps (Part 2) of manufacturing a probe of Embodiment 6 according to the present invention.
Fig. 18 includes perspective views each showing a step of forming a probe tip of a probe of Embodiment 7 according to the present invention.
Fig. 19 includes structural views each showing a probe of Embodiment 8 according to the present invention.
Fig. 20 is a schematic view (Part 1) showing a probe microscope device of Embodiment 9 according to the present invention.
Fig. 21 is a schematic view (Part 2) showing a probe microscope device of Embodiment 9 according to the present invention.
Fig. 22 includes views each showing an operation principle of a probe microscope of Embodiment 9 according to the present invention.
Fig. 23 is a schematic view (Part 3) showing a probe microscope device of Embodiment 9 according to the present invention.
Fig. 24 includes perspective views each showing an example of an embodiment of a probe having a very great number of cantilevers.
Fig. 25 is a schematic view (Part 4) showing a probe microscope device of Embodiment 9 according to the present invention.
Fig. 26 is a schematic view (Part 5) showing a probe microscope device of Embodiment 9 according to the present invention.
Fig. 27 includes views for illustrating a principle that excites vibration of a cantilever of a probe microscope device of Embodiment 10 according to the present invention.
Fig. 28 is a schematic view showing a probe microscope device of Embodiment 10 according to the present invention.
Fig. 29 is a view for illustrating a method for driving a cantilever of a probe microscope device of Embodiment 11 according to the present invention.

### Best Mode for Carrying Out the Invention

A probe for a probe microscope using a transparent substrate has at least one cantilever which is made of a thin film and which is supported on one surface (a front surface) of the transparent substrate with a predetermined space therefrom, the transparent substrate being made of a material transparent to visible light or near-infrared light, the probe having an observation window function allowing optical observation and measurement to be performed while partitioning environments of the inside and the outside of a container, whereby, the cantilever can be optically observed or measured or can be optically driven through the rear surface of the transparent substrate.

### Embodiment 1

Hereinafter, an embodiment of the present invention will be described in detail.

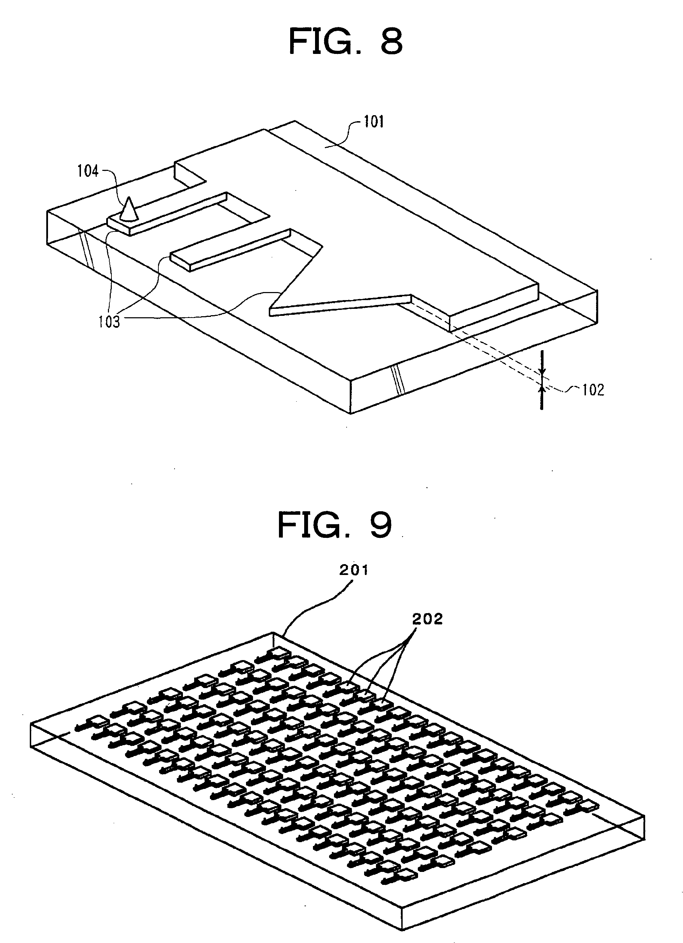

Fig. 8 is a perspective view showing a probe of Embodiment 1 according to the present invention (corresponding to the invention of Claim 1). In the following description of the embodiments, for the convenience, a surface of the substrate on which the cantilever is provided is called a front surface, and a surface of the substrate at which the cantilever is not provided is called a rear surface.

As shown in this figure, on a front surface of a substrate made of a material transparent to visible light or near-infrared light, that is, an optically transparent substrate (hereinafter simply referred to as "transparent substrate") 101, cantilevers 103 made of a thin film are supported with a predetermined space 102 from the front surface of the transparent substrate 101. At the free end of the cantilever 103, a probe tip 104 made of an appropriate material is provided as needed. The material for this probe tip 104 includes, for example, in the case of an atomic force microscope, a material such as silicon, silicon oxide, or a silicon nitride, and in the case of a magnetic force microscope, a material such as iron, nickel, cobalt, or an alloy including them. As shown in the figure, the cantilever 103 may have various shapes such as rectangle or triangle.

The number of the cantilevers 103 per one substrate may be one in some case and may be more than one in the other cases.

Fig. 9 is a perspective view of a probe of Embodiment 1 according to the present invention, having a very great number of cantilevers. On a front surface of a substrate 201 made of a material transparent to visible light or near-infrared light, a very great number of cantilevers 202 made of a thin film are supported with a predetermined space from the front surface of the substrate 201.

According to the probes shown in Figs. 8 and 9, through the rear surface of the transparent substrate 101 or 201, the cantilevers can be optically observed, the amount of deformation or the resonant frequency of the cantilevers can be measured, or the cantilevers can be driven by applying an optical stimulation.

### Embodiment 2

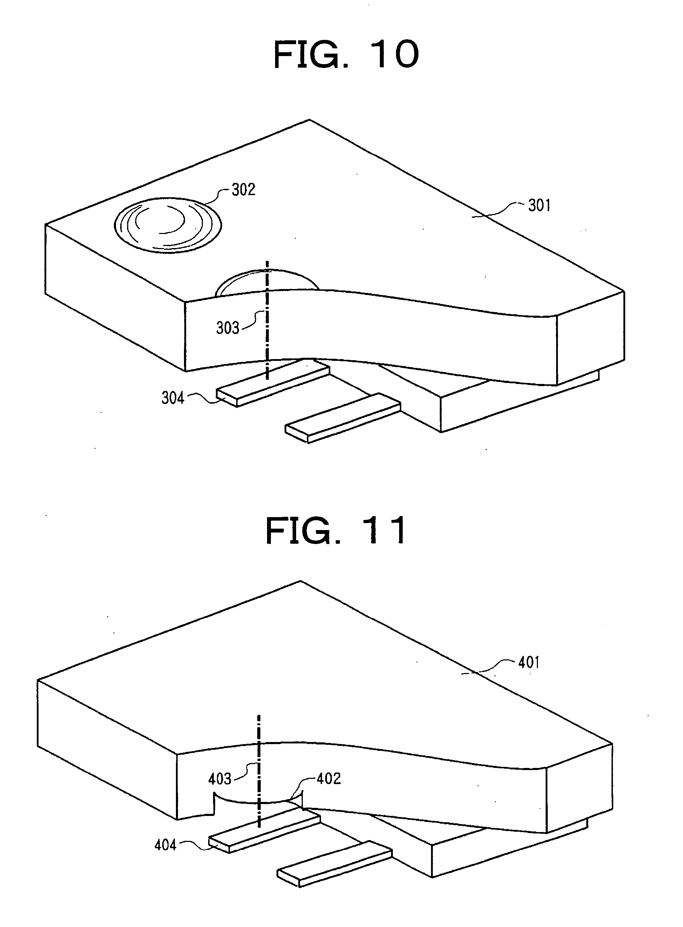

Fig. 10 is a partial cut-away perspective view showing a probe of Embodiment 2 according to the present invention (corresponding to the invention of Claim 2).

As shown in this figure, on the rear surface of a transparent substrate 301, microlenses 302 are provided, and each optical axis 303 thereof coincides with a rear surface (a surface which is not provided with a probe tip) of a cantilever 304. By this microlens 302, light rays used for optical observation, measurement, and driving of the cantilever 304 is allowed to converge on the rear surface thereof. The microlens 302 may be formed by processing the same material member as that for the transparent substrate 301 or may be formed using a photoresist or a transparent resin.

Fig. 11 is a partial cut-away perspective view showing another example of a probe of Embodiment 2 according to the present invention.

In this figure, on the front surface of the transparent substrate 401, a microlens 402 is provided, and an optical axis 403 thereof coincides with the rear surface of a cantilever 404. By this microlens 402, light rays used for optical observation, measurement, and driving of the cantilever 404 is allowed to converge on the rear surface thereof.

By the structure described above, part of an optical system of a probe microscope device may be omitted.

### Embodiment 3

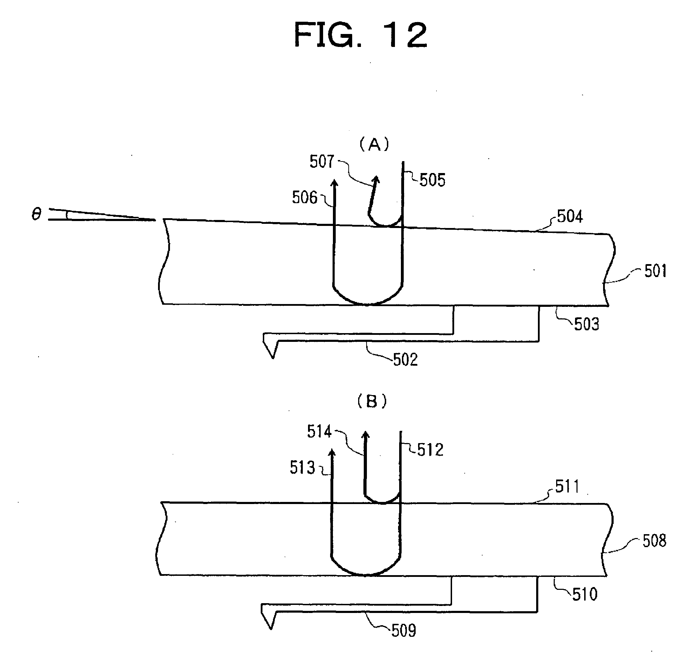

Fig. 12 includes cross-sectional views showing a structure of a probe of Example 3 according to the present invention (corresponding to the invention of Claim 3). Fig. 12(A) shows the case in which the front surface and the rear surface of a transparent substrate are not parallel to each other, and Fig. 12(B) shows the case in which the two surfaces of a transparent substrate are parallel to each other, which is shown for the purpose of comparison.

As described above, in Fig. 12(A), on a front surface 503 of a transparent substrate 501, a cantilever 502 is provided. The front surface 503 of the transparent substrate 501 is not parallel to the rear surface 504 thereof and is slightly inclined thereto. That is, the rear surface 504 has an angel θ relative to the front surface 503 (relative to the horizontal plane).

On the other hand, in Fig. 12(B), a cantilever 509 is provided on a front surface 510 of a transparent substrate 508. The front surface 510 of the transparent substrate 508 is parallel to a rear surface 511 thereof. In the figures, reference numerals 505 and 512 indicate incident light, reference numerals 506 and 513 indicate reflected light reflected on the front surfaces 503 and 510, respectively, and reference numerals 507 and 514 indicate reflected light reflected on the rear surfaces 504 and 511, respectively.

As shown in Fig. 12(B), when the front surface 510 of the transparent substrate 508 and the rear surface 511 thereof are parallel to each other, the traveling directions of the reflected light 513 and 514 of the incident light 512 are the same, hence the interference occurs therebetween.

On the other hand, as shown in Fig. 12(A), when the front surface 503 of the transparent substrate 501 and the rear surface 504 thereof are not parallel to each other, the traveling direction of the reflected light 506 of the incident light 505 reflected on the front surface 503 of the transparent substrate 501 is different from that of the reflected light 507 of the incident light 505 reflected on the rear surface 504, hence no interference occurs therebetween.

### Embodiment 4

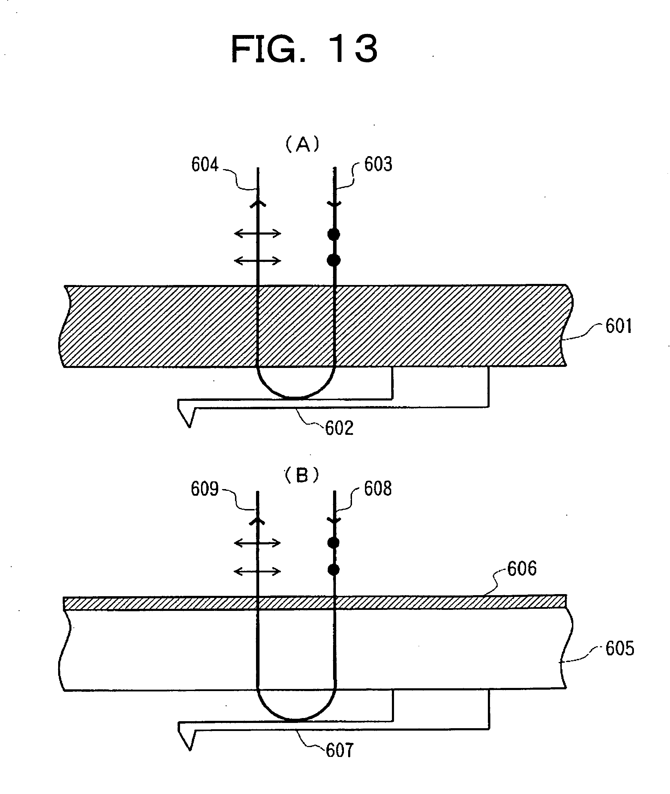

Fig. 13 includes cross-sectional views each showing the structure of a probe of Embodiment 4 according to the present invention (corresponding to the invention of Claim 4). Fig. 13(A) shows the case in which a quarter-wave plate 601 for light having a predetermined wavelength is used as a transparent substrate, and Fig. 13(B) shows the case in which a quarter-wave plate 606 for light having a predetermined wavelength is adhered to a transparent substrate 605.

In this embodiment, owing to the properties of the quarter-wave plate, relative to a polarizing direction (which is assumed to be perpendicular to the plane of the paper) of incident light 603 or 608 having the above predetermined wavelengths and being linearly polarized, a polarizing direction of light 604 or 609 reflected on the cantilever 602 or 607, respectively, turns by 90° (parallel to the plane of the paper).

### Embodiment 5

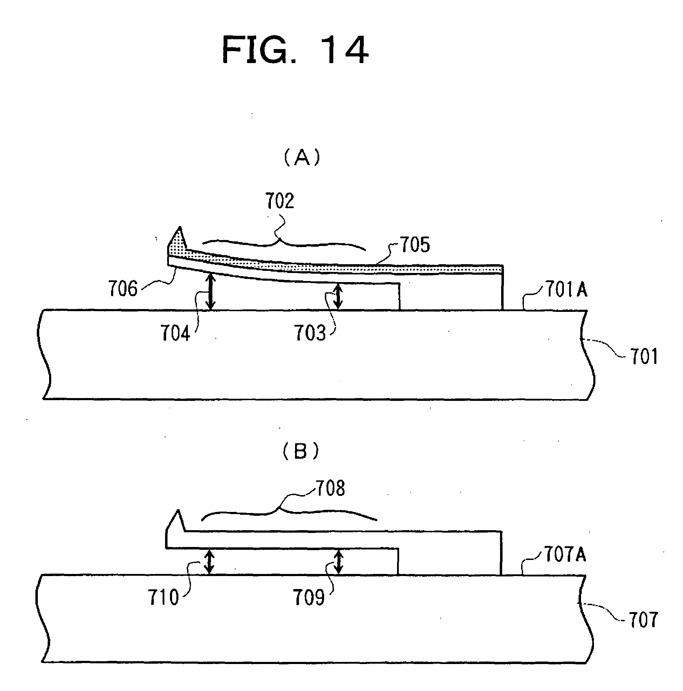

Fig. 14 includes cross-sectional views showing the structure of a probe of Embodiment 5 according to the present invention (corresponding to the invention of Claim 5). Fig. 14(A) is a cross-sectional view of the probe of Embodiment 5 according to the present invention, and Fig. 14(B) is a cross-sectional view showing a probe in which an internal stress is not present, this probe being shown for the purpose of comparison.

As shown in Fig. 14(B), a cantilever 708 having no internal stress is parallel to a front surface 707A of a transparent substrate 707. In respect of the space between the front surface 707A and the cantilever 708, a space 709 in the vicinity of the root of the cantilever 708 is equal to a space 710 in the vicinity of the free end thereof. On the other hand, as shown in Fig. 14(A), in a probe having a cantilever 702 which has an internal stress and which is provided on the front surface 701A of the transparent substrate 701, a tensile stress acts on a front surface 705 of the cantilever 702 relative to a rear surface 706 thereof. Consequently, the cantilever 702 warps upward, and the space between the front surface 701A of the transparent substrate 701 and the cantilever 702 is gradually increased from a space 703 in the vicinity of the root of the cantilever to a space 704 in the vicinity of the free end thereof.

A method for manufacturing a cantilever having an internal stress includes, for example, a method including the steps of forming a cantilever having a two-layered structure made of silicon and silicon nitride, and then removing a sacrificial layer so as to warp the cantilever by an internal stress of the silicon nitride, or a method in which a material is deposited on the cantilever which is already formed as shown in Fig. 14(B), the material being able to generate an internal stress in the cantilever. Alternatively, impurities generating an internal stress may be doped in the cantilever from the front surface thereof.

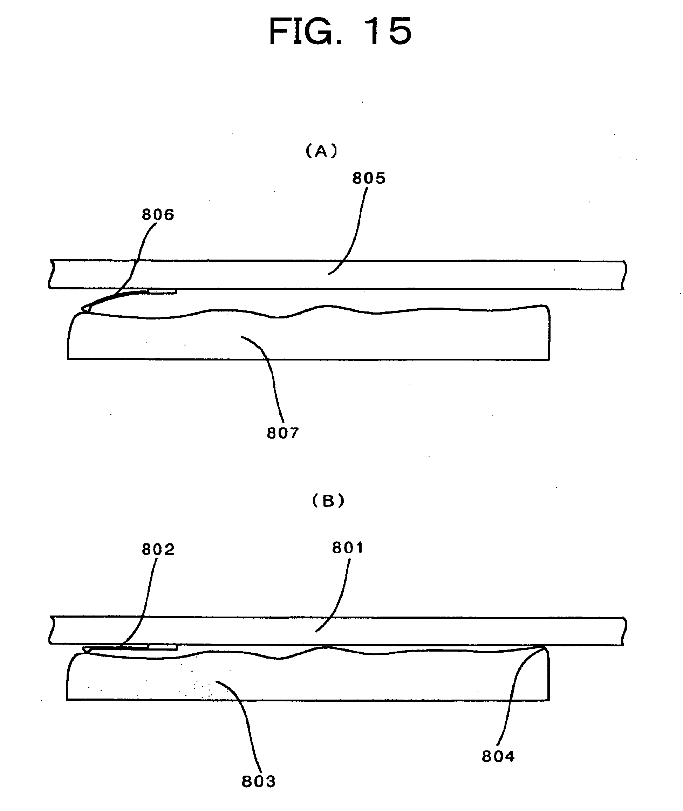

Fig. 15 includes cross-sectional views for illustrating the states, in each of which a sample is observed by the cantilever shown in Fig. 14. Fig. 15(A) shows the state in which a considerably undulated and inclined sample is observed by the cantilever shown in Fig. 14(A) having an internal stress, and Fig. 15(B) shows the state in which a considerably undulated and inclined sample is observed by the cantilever shown in Fig. 14(B) having no internal stress.

In the above figures, reference numerals 803 and 807 each indicate the considerably undulated and inclined sample, reference numerals 801 and 805 each indicate a transparent substrate, reference numeral 802 indicates the cantilever having no internal stress, and reference numeral 806 indicates the cantilever having an internal stress.

As can be seen from the figures, according to the structure shown in Fig. 15(B), when a probe tip scans on the sample 803, the transparent substrate 801 may be brought into contact with an angular portion 804 of the sample 803. On the contrary, according to the structure shown in Fig. 15(A), a transparent substrate is not likely to be brought into contact with the sample 807.

### Embodiment 6

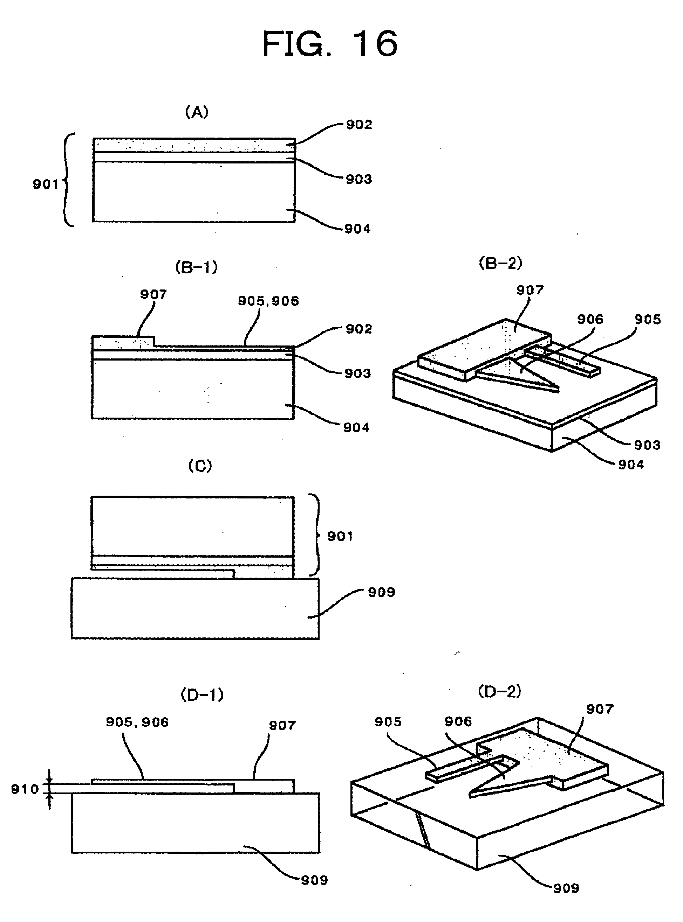

Fig. 16 shows steps (part 1) of manufacturing a probe of Embodiment 6 according to the present invention (corresponding to the invention of Claim 6). In this embodiment, in order to provide a space between a cantilever and a substrate, processing is performed on the cantilever side.
(1) First, as shown in Fig. 16(A), an SOI substrate 901 is prepared. In this figure, reference numeral 904 indicates a handling wafer, reference numeral 903 indicates a buried oxide film, and reference numeral 902 indicates a single crystalline silicon thin film layer.
(2) Next, as shown in Fig. 16(B-1) and 16(B-2:
   perspective view), processing is performed on the single crystalline silicon thin film layer 902 so as to decrease the thickness of a part of the layer 902, and the above part is further processed so as to form cantilevers 905 and 906. The other part of the single crystalline silicon thin film layer 902, which is not processed and has the original thickness, is used as a fixing portion 907 for fixing the cantilevers to a transparent substrate.
(3) Next, as shown in Fig. 16(C), after being turned upside down, the SOI substrate 901 is bonded to a transparent substrate 909 at the fixing portion 907. For example, when borosilicate glass (Pyrex (registered trademark) glass) is used as a material for the transparent substrate 909, the bonding may be performed by anodic bonding.
(4) Next, as shown in Fig. 16(D-1) and 16(D-2:
   perspective view), the buried oxide film 903 and the handling wafer 904 of the SOI substrate 901 are removed by etching, so that a probe is obtained in which the cantilevers 905 and 906 made of the single crystalline silicon thin film layer 902 are supported with a space 910 from the front surface of the transparent substrate 909.

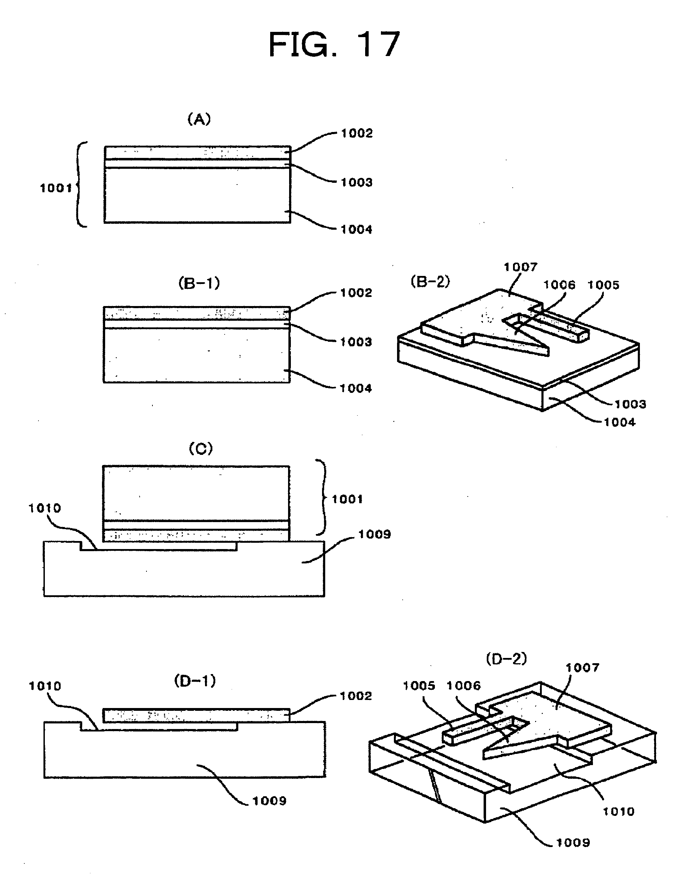

Fig. 17 shows steps (part 2) of manufacturing a probe of Embodiment 6 according to the present invention (corresponding to the invention of Claim 6). In this embodiment, in order to provide a space between cantilevers and a substrate, processing is performed on both the cantilever side and the substrate side.
(1) First, as shown in Fig. 17(A), an SOI substrate 1001 is prepared. In this figure, reference numeral 1004 indicates a handling wafer, reference numeral 1003 indicates a buried oxide film, and reference numeral 1002 indicates a single crystalline silicon thin film layer.
(2) Next, as shown in Fig. 17(B-1) and 17(B-2:
   perspective view), a part of the single crystalline silicon thin film layer 1002 is processed so as to form cantilevers 1005 and 1006. The other part of the single crystalline silicon thin film layer 1002, which is not processed, is
   used as a fixing portion 1007 for fixing the cantilevers to
   a transparent substrate.
(3) Next, as shown in Fig. 17(C), after being turned upside down, the SOI substrate 1001 is bonded to a transparent substrate 1009 at the fixing portion 1007. For example, when borosilicate glass (Pyrex (registered trademark) glass) is used as a material for the transparent substrate 1009, the bonding may be performed by anodic bonding. In this transparent substrate 1009, a recess 1010 is processed beforehand.
(4) Next, as shown in Fig. 17(D-1) and 17(D-2:
   perspective view), the buried oxide film 1003 and the handling wafer 1004 of the SOI substrate 1001 are removed by etching, so that a probe is obtained in which the
   cantilevers 1005 and 1006 made of the single crystalline silicon thin film layer 1002 are supported with a space 1010 from the front surface of the transparent substrate 1009,
   the space 1010 corresponding to the depth of the recess 1010.

### Embodiment 7

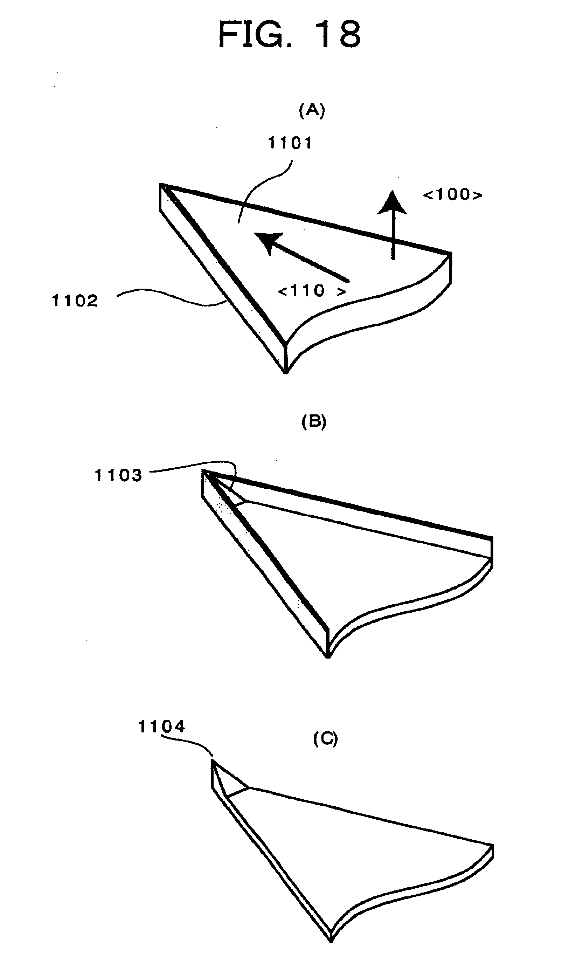

Fig. 18 includes perspective views showing steps of forming a probe tip of a probe of Embodiment 7 according to the present invention (corresponding to the invention of Claim 7). These are enlarged views each showing only the free end of a triangle cantilever (such as the cantilever 906 or 1006) or that of a cantilever having a projecting free end.
(1) First, as shown in Fig. 18(A), a free end 1101 of the cantilever is made of a single crystalline silicon thin film, and the formation thereof is performed by the manufacturing method of Embodiment 6. It is necessary that this single crystalline silicon thin film be formed of the (100) plane and that the free end 1101 of the cantilever be oriented in the <110> direction. Side surfaces 1102 and the rear surface (corresponding to the rear plane of the paper) of this cantilever are protected by a silicon nitride film or a silicon oxide film. For the formation of this film, the film may be deposited all over the cantilever, then being etch-backed, or a film deposited after the steps shown in Fig. 16(B) or 17(B) may be used.
(2) Next, as shown in Fig. 18(B), wet etching is performed using an aqueous alkaline solution, and the thickness of the cantilever is decreased to achieve a desired thickness. By this step, a (111) plane 1103 starting from the free end 1101 of the cantilever appears.
(3) Next, as shown in Fig. 18(C), the silicon oxide film or the silicon nitride film protecting the side surfaces and the rear surface is removed, and a probe tip having a sharp free end 1104 is obtained.

After the above steps are performed, silicon oxide is formed on the surface by low-temperature thermal oxidation, followed by removal thereof using hydrofluoric acid, thereby the free end of the probe tip can be made sharper.

### Embodiment 8

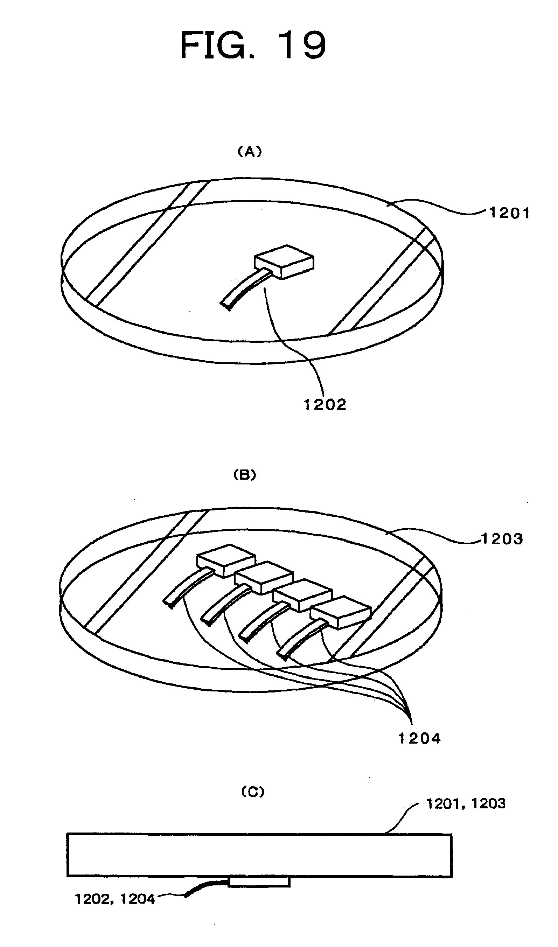

Fig. 19 includes views each showing the structure of a probe of Embodiment 8 according to the present invention (corresponding to the invention of Claim 8). Fig. 19(A) is a perspective view of a probe having one cantilever, Fig. 19(B) is a perspective view of a probe having a plurality of cantilevers, and Fig. 19(C) is a side view of the probes mentioned above.

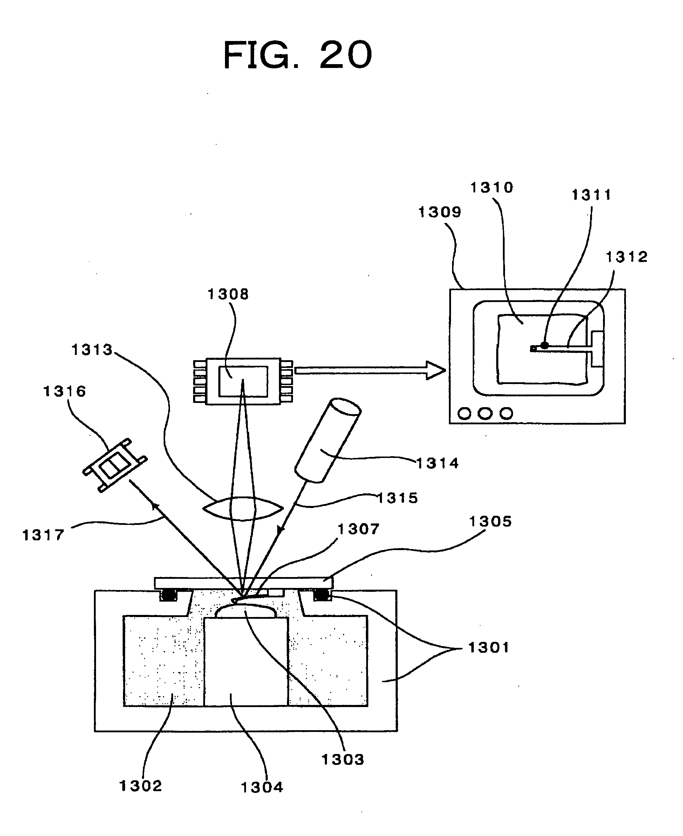

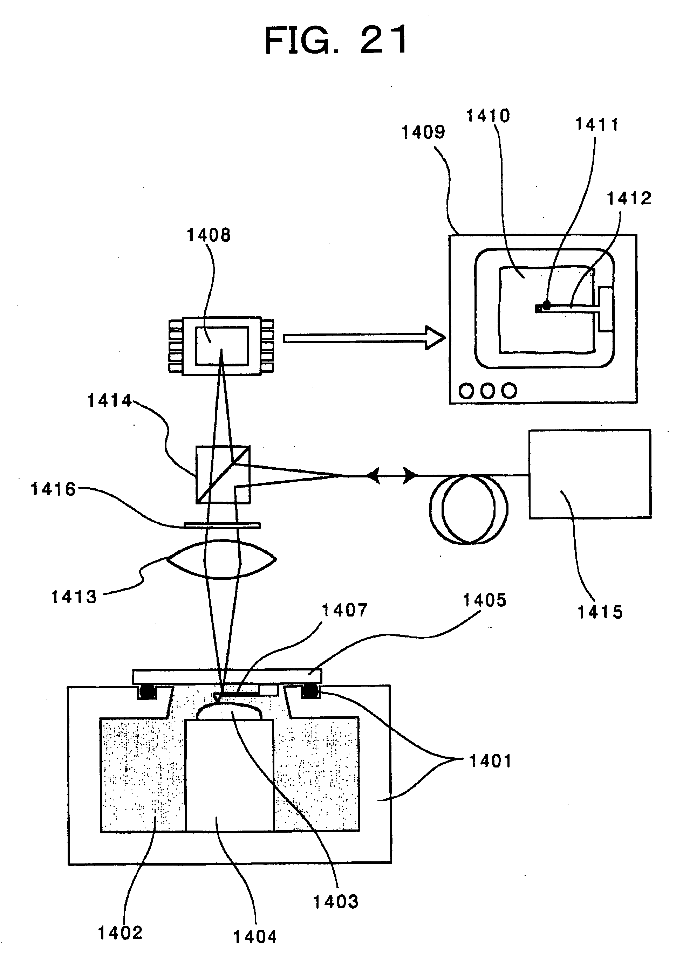

This probe is used as a probe for a probe microscope device shown in Figs. 20 and 21 which will be described later.

In Fig. 19(A), reference numeral 1201 indicates a disc-shaped transparent substrate, and reference numeral 1202 indicates one cantilever provided on the front surface of the transparent substrate 1201.

In Fig. 19(B), reference numeral 1203 indicates a disc-shaped transparent substrate, and reference numeral 1204 indicates a plurality of cantilevers 1204 provided on the front surface of the transparent substrate 1203.

The probes described in Figs. 19(A) and 19(B) are probes described in one of the above Embodiment 1 to 5.

According to the structure shown above, the probe itself may be used as an observation window, and while environments of the outside and the inside of a container are partitioned by the probe itself, optical observation and measurement of the cantilever can be performed. As a result, the structure of the device is simplified, and miniaturization thereof can be achieved.

In addition, since the cantilever is directly mounted on the front surface of the transparent substrate, the space from the rear surface thereof to the cantilever and to a sample can be decreased to the minimum necessary. As a result, an objective lens for an optical microscope having a high magnification compared to that for a probe microscope device according to a conventional technique can be used.

### Embodiment 9

Fig. 20 is a schematic view (part 1) of a probe microscope device of Embodiment 9 according to the present invention (corresponding to the invention of Claim 9).

Depending on a physical value to be detected (such as the atomic force or the magnetic force) and on properties of a sample (for example, being very soft or having considerable roughness), a cantilever and a probe tip used in this embodiment is formed of an appropriate material with an appropriate dimension.

In this embodiment, a probe microscope is shown in which deformation or vibration property of a cantilever is optically measured through the rear surface of the probe by optical lever. A probe 1305 used in this embodiment may have one cantilever as shown in Fig. 19(A) in some cases and may have a plurality of cantilevers as shown in Fig. 19(B) in the other cases. Reference numeral 1301 indicates a container and gaskets, and an inside 1302 thereof may be in a specific environment in some cases. A sample 1303 is provided on a three-dimensional fine motion mechanism 1304. After passing through a transparent substrate of the probe 1305, laser light 1315 emitted from a laser light source 1314 is reflected on the rear surface of a cantilever 1307, and reflected light 1317 again passes through the transparent substrate so as to form a laser spot on a two-piece photodiode 1316.

In addition, with a device displaying images of the cantilever 1307 and the sample 1303 on an image monitor 1309 by an imaging element 1308 and an optical lens 1313, an image 1312 of the cantilever 1307, an image 1310 of the sample 1303, and an image 1311 of a laser spot can be monitored by the image monitor 1309.

When the probe described in Example 4 is used, a quarter-wave plate (not shown) is not necessary. In order to vibrate the cantilever 1307, a piezoelectric element, electrodes, or the like may be mounted on the probe 1305, or the probe 1305 may be mounted on a piezoelectric element or the like as needed.

Fig. 21 is a schematic view (part 2) showing a probe microscope device of Embodiment 9 according to the present invention (corresponding to the invention of Claim 9).

One example of an embodiment of a probe microscope will be described in which the probe described in Embodiment 1 or 2 is used, and in which deformation or vibration property of the cantilever is optically measured by a laser Doppler velocimeter through the rear surface of this probe.

A probe 1405 used in this embodiment may have one cantilever as shown in Fig. 19(A) in some cases and may have a plurality of cantilevers as shown in Fig. 19(B) in the other cases. Reference numeral 1401 indicates a container and gaskets, and an inside 1402 thereof may be in a specific environment in some cases. A sample 1403 is provided on a three-dimensional fine motion mechanism 1404. After passing through a beam splitter 1414, a quarter-wave plate 1416, and an optical lens 1413, laser light emitted from a laser Doppler velocimeter 1415 is reflected on the rear surface of a cantilever 1407 and again after passing through the optical lens 1413, the quarter-wave plate 1416, and the beam splitter 1414, the laser light thus returns to the laser Doppler velocimeter 1415.

In addition, with a device displaying images of the cantilever 1407 and the sample 1403 on an image monitor 1409 by an imaging element 1408, an image 1412 of the cantilever 1407, an image 1410 of the sample 1403, and an image 1411 of a laser spot can be monitored by the image monitor 1409.

When the probe described in Embodiment 2 is used, the optical lens 1413 may not be necessary in some cases. When the probe described in Embodiment 4 is used, the quarter-wave plate 1416 is not necessary.

In order to vibrate the cantilever 1407, a piezoelectric element, electrodes or the like may be mounted on the probe 1405, or the probe 1405 may be mounted on a piezoelectric element or the like as needed.

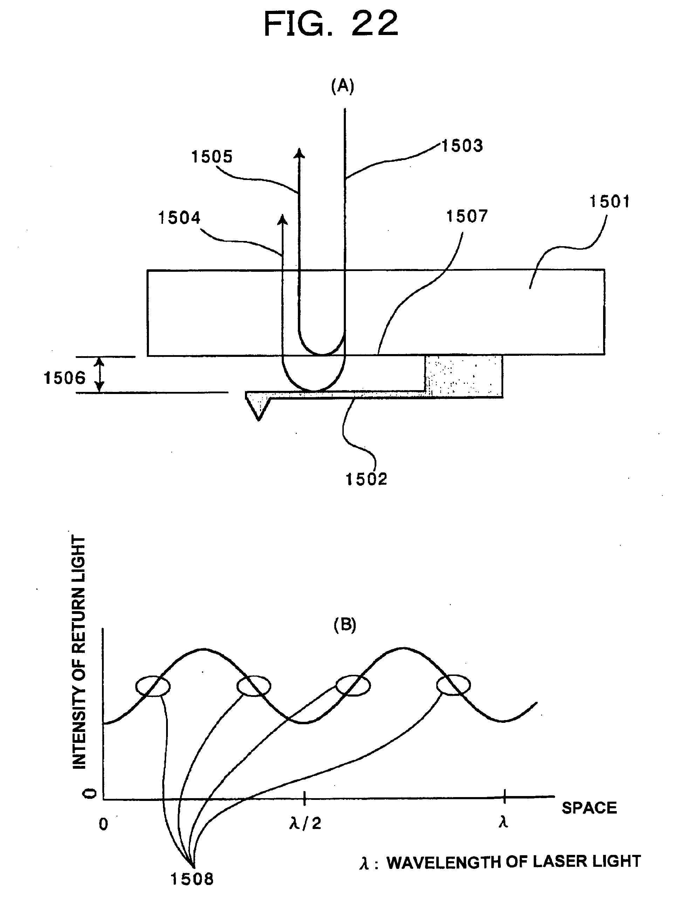

Fig. 22 includes views showing an operation principle of a probe microscope of Embodiment 9 according to the present invention (corresponding to the invention of Claim 9).

Fig. 22(A) is a cross-sectional view of a probe of the probe microscope mentioned above, and on the front surface of a transparent substrate 1501, a cantilever 1502 is provided. When being incident on the rear surface of the transparent substrate 1501, laser light 1503 is reflected on the front surface 1507 of the transparent substrate 1501 to generate light 1505 returning upward and is also reflected on the rear surface of the cantilever 1502 to generate light 1504 returning upward. Since these two types of light are interfered with each other, the intensity of actual light returning upward varies according to a space 1506 between the cantilever 1502 and the transparent substrate 1501. One example of the relationship between a space 1506 and the intensity of the return light is shown in Fig. 22(B). When the relationship between the space 1506 and the wavelength is selected so as to maximize (1508) the rate of change in intensity of the return light, the intensity of the return light is approximately proportional to the deformation of the cantilever.

The probe microscope device described in Embodiment 9 detects the deformation and vibration property of the cantilever by detecting the above intensity of the return light using a light-receiving element.

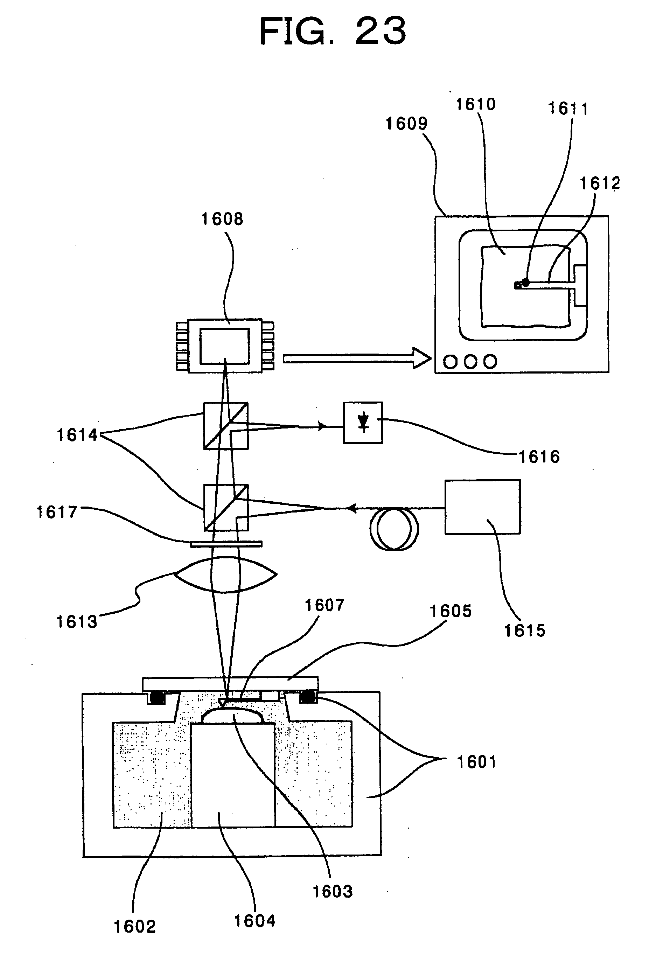

Fig. 23 is a schematic view (part 3) of a probe microscope device of Embodiment 9 according to the present invention (corresponding to the invention of Claim 9).

A probe 1605 used in this embodiment may have one cantilever as shown in Fig. 19(A) in some cases and may have a plurality of cantilevers as shown in Fig. 19(B) in the other cases. Reference numeral 1601 indicates a container and gaskets, and an inside 1602 thereof may be in a specific environment in some cases. A sample 1603 is provided on a three-dimensional fine motion mechanism 1604. After laser light emitted from a laser light source 1615 passes through two beam splitters 1614, a quarter-wave plate 1617, and an optical lens 1613, interference occurs at a place between the rear surface of a cantilever 1607 and a transparent substrate. Subsequently, after again passing through the optical lens 1613, the quarter-wave plate 1617, and the beam splitters 1614, return light reaches a light-receiving element 1616.

In addition, with a device displaying images of the cantilever 1607 and the sample 1603 on an image monitor 1609 by an imaging element 1608, an image 1612 of the cantilever 1607, an image 1610 of the sample 1603, and an image 1611 of a laser spot can be monitored by the image monitor 1609.

In order to vibrate the cantilever 1607, a piezoelectric element, electrodes or the like may be mounted on the probe 1605, or the probe 1605 may be mounted on a piezoelectric element or the like as needed.

When the probe described in Embodiment 2 is used, the optical lens 1613 may not be necessary in some cases. When the probe described in Embodiment 4 is used, the quarter-wave plate 1617 is not necessary.

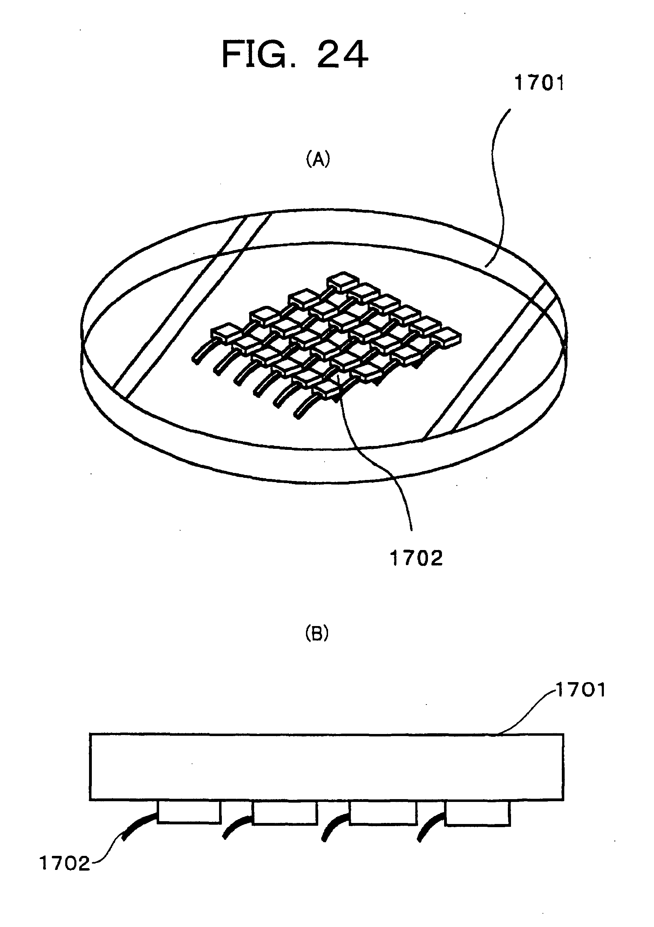

Fig. 24 includes views showing an example of an embodiment of a probe having a very great number of cantilevers, Fig. 24(A) is a perspective view of the probe having a very great number of cantilevers, and Fig. 24(B) is a side view of the probe having a very great number of cantilevers. A very great number (such as 10,000) of cantilevers 1702 are provided on an optically transparent substrate 1701.

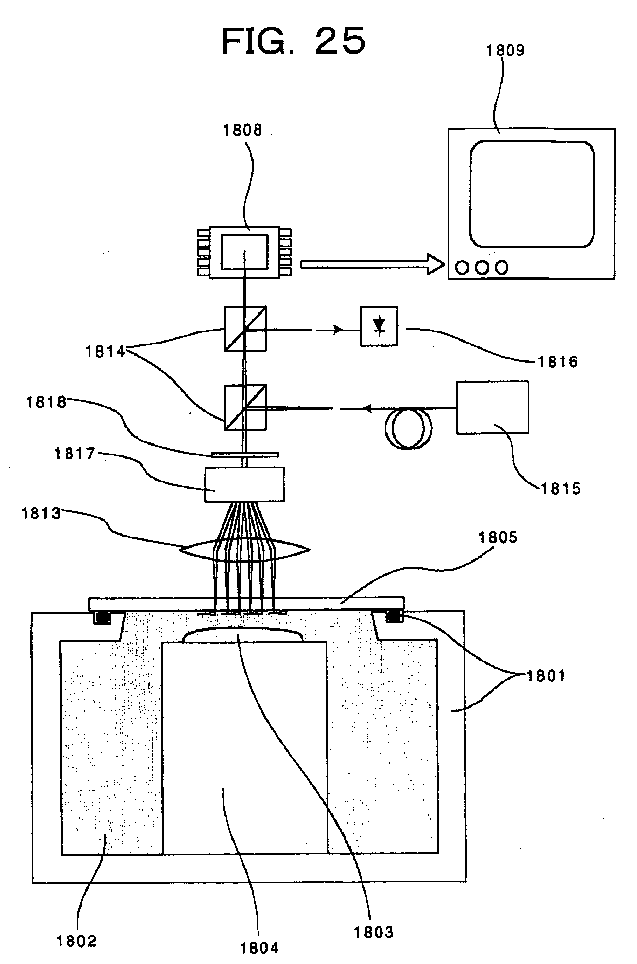

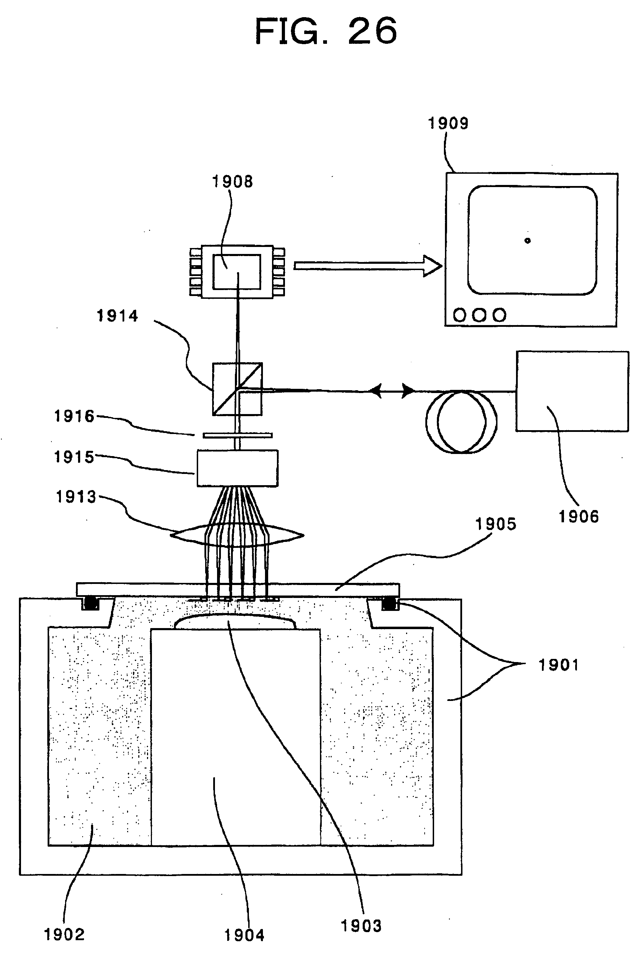

Next, with reference to Figs. 25 and 26, there will be described an example of an embodiment of a probe microscope using a probe which has a very great number of cantilevers as described above.

Fig. 25 is a schematic view (part 4) of a probe microscope device of Embodiment 9 according to the present invention.

In this embodiment, a probe 1805 shown in Fig. 24 is used in the device shown in Fig. 23, and an optical scanner 1817 is additionally provided. Reference numeral 1801 indicates a container and gaskets, and an inside 1802 thereof may be in a specific environment in some cases. A sample 1803 is provided on a three-dimensional fine motion mechanism 1804. After passing through two beam splitters 1814 and a quarter-wave plate 1818, laser light emitted from a laser light source 1815 is directed in a predetermined direction by the optical scanner 1817 and is then led to a desired cantilever of the great number of cantilevers through an optical lens 1813. Subsequently, after again passing through the optical lens 1813, the optical scanner 1817, and the quarter-wave plate 1818, the laser light reflected on the above cantilever is led to a light-receiving element 1816 by the beam splitters 1814.

By the operation described above, the deformation or vibration property of the selected one cantilever can be detected.

In addition, there may be provided a device displaying images of the cantilever and the sample 1803 on an image monitor 1809 by an imaging element 1808.

In order to vibrate the cantilever, a piezoelectric element, electrodes or the like may be mounted on the probe 1805, or the probe 1805 may be mounted on a piezoelectric element or the like as needed.

When the probe described in Embodiment 2 is used, the optical lens 1813 may not be necessary in some cases. When the probe described in Embodiment 4 is used, the quarter-wave plate 1818 is not necessary.

Fig. 26 is a schematic view (part 5) of a probe microscope device of Embodiment 9 according to the present invention.

In this embodiment, a probe 1905 shown in Fig. 24 is used in the device shown in Fig. 21, and an optical scanner 1915 is additionally provided. Reference numeral 1901 indicates a container and gaskets, and an inside 1902 thereof may be in a specific environment in some cases. A sample 1903 is provided on a three-dimensional fine motion mechanism 1904. After passing through a beam splitter 1914, and a quarter-wave plate 1916, laser light emitted from a laser Doppler velocimeter 1906 is directed in a predetermined direction by the optical scanner 1915 and is then led to a desired cantilever of a great number of cantilevers through an optical lens 1913. Subsequently, after again passing through the optical lens 1913, the optical scanner 1915, and the quarter-wave plate 1916, the laser light reflected on the above cantilever is led to the laser Doppler velocimeter 1906 through the beam splitter 1914.

By the operation described above, the deformation or vibration property of the selected one cantilever can be detected.

In addition, there may be provided a device displaying images of the cantilever and the sample 1903 on an image monitor 1909 by an imaging element 1908.

In order to vibrate the cantilever, a piezoelectric element, electrodes or the like may be mounted on the probe 1905, or the probe 1905 may be mounted on a piezoelectric element or the like as needed.

When the probe described in Embodiment 2 is used, the optical lens 1913 may not be necessary in some cases. When the probe described in Embodiment 4 is used, the quarter-wave plate 1916 is not necessary.

### Embodiment 10

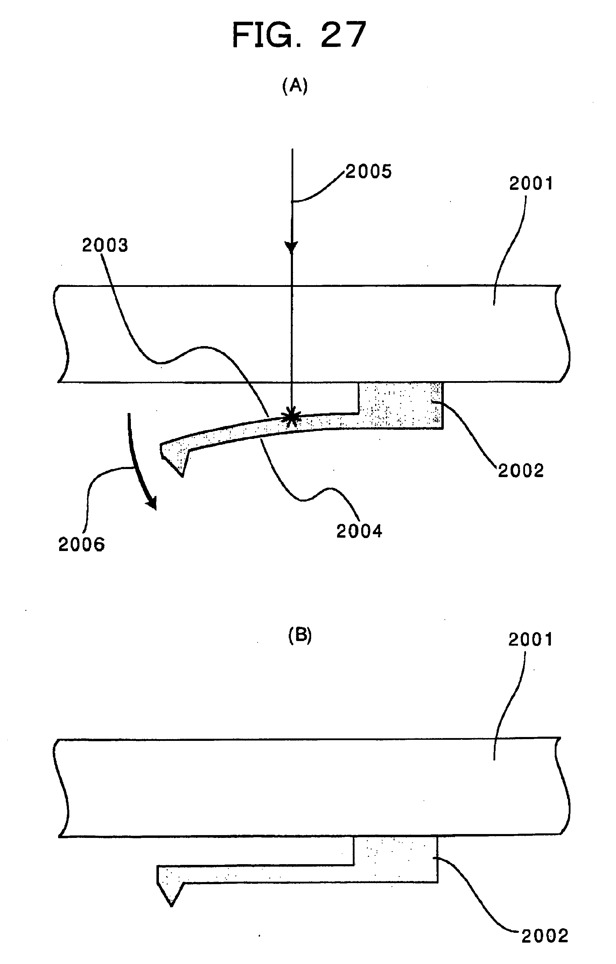

Fig. 27 includes views for illustrating a principle that excites vibration of a cantilever of a probe microscope device of Embodiment 10 according to the present invention (corresponding to the invention of Claim 10).

In the figure, reference numeral 2001 indicates a transparent substrate, and the state is shown by a cross-sectional view in which a cantilever 2002 is provided on the front surface of the substrate. As shown in Fig. 27(A), when laser light 2005 is irradiated to the cantilever 2002 through the transparent substrate 2001, the cantilever 2002 is heated and thermally expanded by absorbing energy of this laser light 2005; however, since the amount of heat generated at an upper surface 2003 of the cantilever is larger than that at a lower surface 2004 thereof, a bending moment 2006 is generated, and as a result, the cantilever 2002 is warped downward.

When irradiation of the laser light 2005 is stopped, as shown in Fig. 27(B), the cantilever 2002 returns to a straight shape. Although the warpage described above is slight, vibration can be excited when the laser light 2005 is turned on and off so that the frequency thereof is allowed to coincide with the resonant frequency of the cantilever 2002. Excitation of mechanical vibration by blinking light has been disclosed in Non-Patent Document 1 described above.

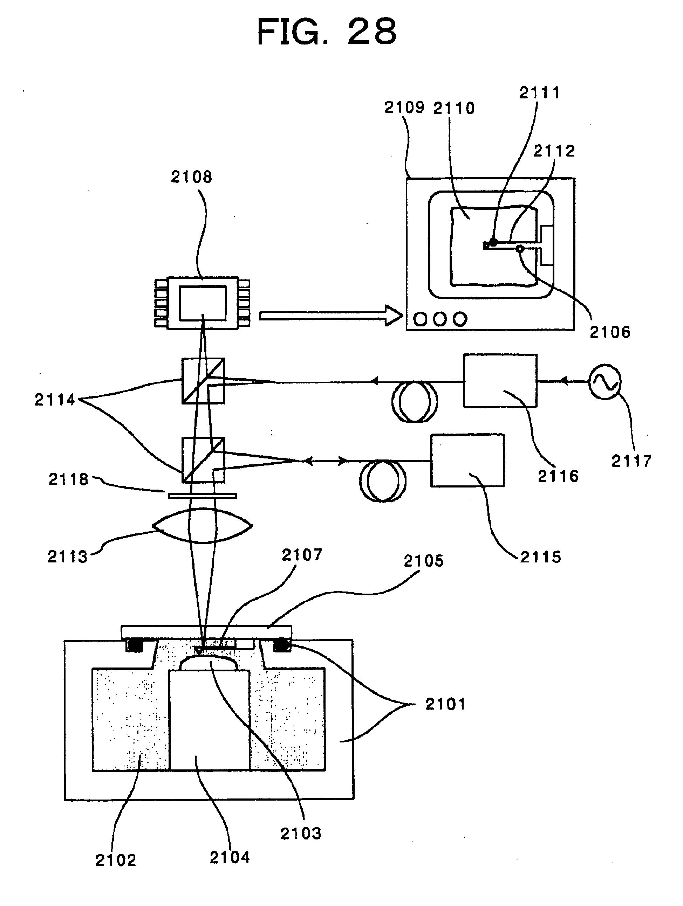

Fig. 28 is a schematic view showing a probe microscope device of Embodiment 10 according to the present invention (corresponding to the invention of Claim 10).

A probe 2105 used in this embodiment may have one cantilever as shown in Fig. 19(A) in some cases and may have a plurality of cantilevers as shown in Fig. 19(B) in the other cases. Reference numeral 2101 indicates a container and gaskets, and an inside 2102 thereof may be in a specific environment in some cases. A sample 2103 is provided on a three-dimensional fine motion mechanism 2104. After passing through two beam splitters 2114, a quarter-wave plate 2118, and an optical lens 2113, laser light emitted from a laser Doppler velocimeter 2115 is reflected on the rear surface of a cantilever 2107 and again passes through the optical lens 2113, the quarter-wave plate 2118, and the beam splitters 2114, so that the laser light returns to the laser Doppler velocimeter 2115.

Laser light emitted from a laser light source 2116 which can modulate the intensity using an electrical signal is also irradiated to the cantilever 2107 after passing through the two beam splitters 2114, the quarter-wave plate 2118, and the optical lens 2113. The irradiation position and the spot diameter of the excitation laser light and those of the above laser light emitted from the laser Doppler velocimeter 2115 can be independently adjusted.

In addition, with a device displaying images of the cantilever 2107 and the sample 2103 on an image monitor 2109 by an imaging element 2108, an image 2112 of the cantilever 2107, an image 2110 of the sample 2103, an image 2111 of the laser spot of the laser Doppler velocimeter 2115, and an image 2106 of the laser spot of the excitation laser light can be monitored by the image monitor 2109.

When the probe described in Embodiment 2 is used, the optical lens 2113 may not be necessary in some cases. When the probe described in Embodiment 4 is used, the quarter-wave plate 2118 is not necessary.

An intensity modulation frequency of the excitation laser light is determined by the frequency of an excitation frequency signal generator 2117. By setting the frequency to coincide with the resonant frequency of the cantilever 2107 at a certain point, the amplitude of the vibration is decreased as the resonant frequency of the cantilever 2107 is changed, and the change in resonant frequency is obtained. In addition, instead of the excitation frequency signal generator 2117, by using an output signal of the laser Doppler velocimeter 2115 being amplified and passed through a filter, self-excited vibration may be allowed to occur, and by detecting the change in this vibration frequency, the change in resonant frequency can also be detected.

In the embodiment described above, the probe microscope device is described by way of example in which the method for vibrating the cantilever by blinking light is performed in combination with the laser Doppler velocimeter. Alternatively, a probe microscope device may also be formed in which the method for vibrating the cantilever by blinking light is combined with an optical lever or the method described in Embodiment 9.

### Embodiment 11

Next, a method for driving a cantilever of a probe microscope device of Embodiment 11 according to the present invention will be described.

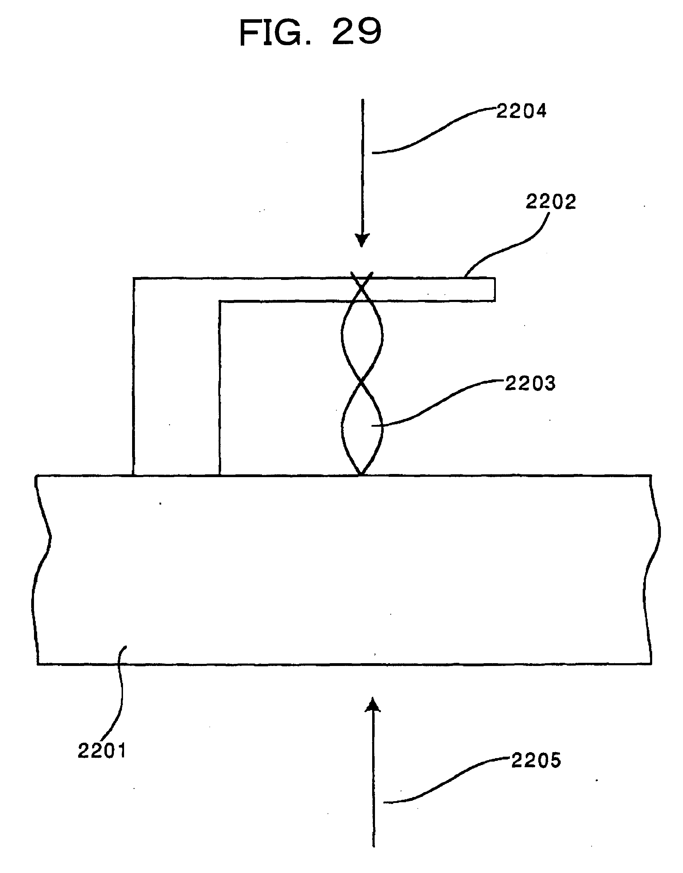

As shown in Fig. 29, on a substrate 2201, a thin film structure (cantilever) 2202 is provided parallel to this substrate 2201. When laser light 2204 is irradiated from the above, the thin film structure (cantilever) 2202 absorbs part of the light. The rest of the light passes through the thin film structure 2202 and reaches the surface of the substrate 2201. A space between the thin film structure 2202 and the substrate 2201 forms the structure similar to one type of Fabry-Perot resonator, and a standing light wave 2203 is generated.

The amount of energy absorbed from light in the thin film 2202 is proportional to the amplitude of the standing wave 2203. When the amount of light absorbed in the thin film 2202 at the top side is different from that at the bottom side, a bending moment is generated, so that the thin film is bent; however, since the standing wave 2203 is present, as a result of the above bending, the amount of absorption of light is also changed. It has been known that when the amplitude and the position of the standing wave 2203 satisfy appropriate conditions, self-excited vibration occurs in the thin film structure 2202. This phenomenon is disclosed in Non-Patent Document 2 described above.

Since the probe of the present invention uses the transparent substrate, laser light 2205 is allowed to pass through the transparent substrate from the lower side shown in Fig. 29, and self-excited vibration similar to that described above can be generated.

An embodiment of a probe microscope device in which self-excited vibration is generated in a cantilever using this phenomenon can be achieved with, for example, exactly the same device as in the embodiment shown in Fig. 23, and by appropriately adjusting the intensity and the wavelength of the laser light source 1615 and the space between the cantilever 1607 and the transparent substrate. Alternatively, it can be achieved with an embodiment approximately equivalent to that shown in Fig. 28, additionally changing the excitation laser light source 2116 to a laser light source having a constant intensity, and adjusting the intensity and the wavelength thereof and the space between the cantilever 2107 and the substrate appropriately. An optical lever may also be used in combination.

The present invention is not limited to the embodiments described above, and within the spirit and the scope of the present invention, various modification may be performed and are not excluded from the range of the present invention.

### Industrial Applicability

The present invention may be suitably applied to a probe microscope having a probe with high accuracy.

## Claims

1. A probe for a probe microscope using a transparent substrate, comprising: at least one cantilever which is made of a thin film and which is supported on one surface of the transparent substrate with a predetermined space therefrom, the transparent substrate being formed of a material transparent to visible light or near-infrared light and having an observation window function which enables optical observation and measurement while partitioning environments of the inside and the outside of a container, whereby the cantilever is optically observed or measured or is optically driven through the rear surface of the transparent substrate.

2. The probe for a probe microscope using a transparent substrate, according to Claim 1, wherein a microlens is formed as a part of the transparent substrate, the microlens allows light used for optical observation or measurement of the cantilever, or for optical driving thereof to converge on the rear surface of the cantilever.

3. The probe for a probe microscope using a transparent substrate, according to Claim 1, wherein the front surface of the transparent substrate is slightly inclined to the rear surface thereof in order to prevent the interference between a light reflected on the front surface of the transparent substrate and a light reflected on the rear surface thereof.

4. The probe for a probe microscope using a transparent substrate, according to Claim 1, wherein the transparent substrate is also used as a quarter-wave plate.

5. The probe for a probe microscope using a transparent substrate, according to Claim 1, wherein the cantilever has an internal stress, whereby the space between the cantilever and the transparent substrate is gradually increased from a fixed portion of the cantilever toward the free end thereof.

6. A method for manufacturing a probe for a probe microscope using a transparent substrate, comprising the steps of
(a) forming a cantilever from a single crystalline silicon thin film of a SOI substrate;
(b) bonding the rear surface of the SOI substrate to a glass substrate; and
(c) removing a handling wafer and a buried oxide film of the SOI substrate.

7. The method for manufacturing a probe for a probe microscope using a transparent substrate, according to Claim 6, further comprising the step of forming a probe tip at the free end of the cantilever by wet etching.

8. A probe microscope device comprising: the probe for a probe microscope using a transparent substrate, according to one of Claims 1 to 5, wherein deformation or vibration property of the cantilever, which is caused by interaction with a sample, is optically measured through the rear surface of the transparent substrate.

9. The probe microscope device according to Claim 8, wherein the deformation or the vibration property of the cantilever is detected from the change in intensity of reflected light caused by optical interference which occurs between the cantilever and the transparent substrate.

10. The probe microscope device according to Claim 8, wherein the cantilever is irradiated to vibrate through the rear surface of the transparent substrate with light, the intensity of which varies at a frequency equal to a resonant frequency of the cantilever.

11. The probe microscope device according to Claim 8, wherein the cantilever is irradiated with light having a constant intensity through the rear surface of the transparent substrate so as to generate self-excited vibration in the cantilever.
